(19) Europäisches Patentamt
European Patent Office
Office européen des brevets

(11) **EP 3 343 086 A1**

(12) **EUROPEAN PATENT APPLICATION**
published in accordance with Art. 153(4) EPC

(43) Date of publication:
**04.07.2018 Bulletin 2018/27**

(21) Application number: **16839401.3**

(22) Date of filing: **15.02.2016**

(51) Int Cl.:
*F17D 5/00* *(2006.01)*    *F17D 1/14* *(2006.01)*
*F16L 55/045* *(2006.01)*    *F04B 49/10* *(2006.01)*

(86) International application number:
**PCT/KR2016/001466**

(87) International publication number:
**WO 2017/034110 (02.03.2017 Gazette 2017/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **24.08.2015 KR 20150118635**

(71) Applicant: **Flowtech Co., Ltd.**
**Incheon, 21634 (KR)**

(72) Inventors:
• **YANG, Jae Gu**
  **Incheon 22001 (KR)**
• **YANG, Ji Suk**
  **Incheon 22001 (KR)**
• **OH, Jae Wook**
  **Incheon 22238 (KR)**
• **YANG, Jai Youl**
  **Jinan-gun, Jeollabuk-do 55410 (KR)**

(74) Representative: **Gulde & Partner**
**Patent- und Rechtsanwaltskanzlei mbB**
**Wallstraße 58/59**
**10179 Berlin (DE)**

(54) **WATER PIPING SYSTEM HAVING WATER HAMMER BUFFERING FUNCTION USING EJECTOR EFFECT AND PRESSURE TANK CONNECTOR THEREFOR**

(57) Disclosed is a water piping system. More particularly, the present invention relates to a water piping system having a function to dampen the effects of water hammer and check valve slam at a sudden stoppage of a pump and relates to a tank connector therefor, in which the water piping system ejects a high pressure jet stream from a high pressure tank in the direction of a primary flow in a main pipeline, thereby deterring the backflow of pipeline water in the main pipeline and reducing the pressure of pipeline water against a check valve, which enables the check valve to be slowly closed.

[Fig. 2]

**Description**

**Technical Field**

The present invention relates to a water piping system. More particularly, the present invention relates to a water piping system having a function to dampen the effects of water hammer and check valve slam at a sudden stoppage of a pump and relates to a tank connector therefor, in which the water piping system ejects a high pressure jet stream from a high pressure tank in the direction of a primary flow in a main pipeline, thereby deterring the backflow of pipeline water in the main pipeline and reducing the pressure of pipeline water against a check valve, which enables the check valve to be slowly closed.

**Background Art**

When a pump is suddenly stopped or a check valve is abruptly closed, a transition event generally occurs in which the flow rate or velocity of water abruptly changes. This transition event is also called hydraulic shock or water hammer. When a water hammer event occurs, the pressure in a pipeline abruptly surges or drops below the vapor pressure of water in the pipeline, which vaporizes water. After that, upon occurrence of water column separation or return, collapse or implosion of the pipeline may occur due to a shock wave.

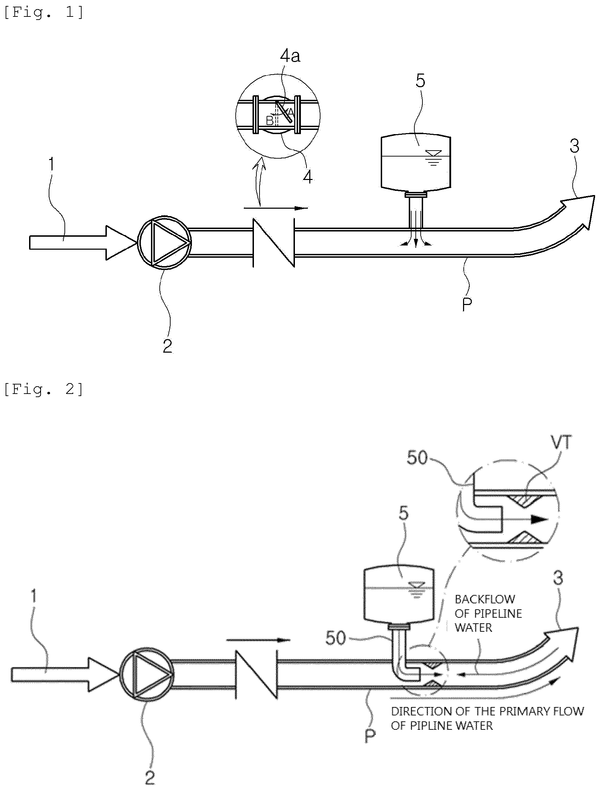

As illustrated in FIG. 1, a typical water piping system includes a pump 2 that pressurizes water introduced from a suction side, a main pipeline P that conveys pressurized water therethrough, and a discharge side 3 that discharges the water conveyed through the main pipeline P. The main pipeline P is equipped with a check valve 4 for preventing backflow of water, a flexible joint (not shown) for preventing vibration, and a shutoff valve (not shown) for shutting off a water stream that flows toward the discharge side 3.

In this water piping system, if the pump 2 suddenly stops, water that is being conveyed in the main pipeline P at this point temporarily advances in the direction of a primary flow due to inertia. After that, when a negative pressure occurs on the side of the pump 2, a vapor cavity develops and water having high potential energy flows backward, thereby breaking a vapor cavity and forming a strong shock wave. This shock wave is likely to cause damage to the main pipeline P and the pump 2.

Another cause of a water hammer event may be a slamming attributed to an abrupt closure of the check valve 4. The term "slamming" refers to an event in which a disk 4a of the check valve 4 slams shut. That is, as illustrated in FIG. 1, the disk 4a of the check valve 4 opens being rotated in the direction of the primary flow of water to be in the state "A" during an operation of the pump P and abruptly closes being rotated to the position of "B" by the backflow of water at a sudden stoppage of the pump 2 so that the velocity energy of the water flowing backward is converted to the pressure energy (refer to the following equation 1). The shock wave attributed to a slamming may propagate to the main pipeline P and the pump 2, resulting in collapse of a water piping system.

$$\Delta H = (C/g)\Delta V \qquad\qquad \text{Equation (1)}$$

(wherein, H is the head, C is the propagation velocity of a shock wave according to material properties of a pipeline, g is the acceleration of gravity, and V is the velocity of fluid)

Conventionally, a pressure tank 5 that normally stores water therein is added to the main pipeline P to alleviate a shock wave, as illustrated in FIG. 1. In this case, when the pump 2 suddenly stops and thus a cavity develops in the pipeline on the downstream side from the pump 2, the water in the pressure tank 5 fills the cavity to prevent a pressure down-surge in the pipeline, which alleviates a shock wave attributed to the backflow of pipeline water, thereby dampening water hammer.

The conventional water hammer dampening method using the pressure tank 5 can prevent generation of a cavity and slightly reduce a shock wave of the backflow. However, the conventional method cannot perfectly prevent the backflow of water, but rather causes a sudden closure of the check valve 4 due to the high-pressure water discharged from the pressure tank 5, resulting in check valve slam. Along with the check valve slam, the original flow of pipeline water and the high-pressure water discharged from the pressure tank 5 merge with each other and flow backward together, thereby transferring a strong shock wave to the check valve 4. That is, installation of the pressure tank 5 actually intensifies a shock wave.

To dampen water hammer, when the backflow of pipeline water occurs, the check valve 4 has to be slowly closed at the final moment to avoid check valve slam. However, the addition of the pressure tank 5 leads to a sudden closure of the check valve 4, thereby causing check valve slam and water hammer. Therefore, development of a water piping system that enables a complete closure of a check valve even with the use of a pressure tank 5 is required.

**Disclosure**

**Technical Problem**

Accordingly, the present invention has been made keeping in mind the above problems occurring in the prior art, and an object of the present invention is to provide a water piping system equipped with a pressure tank and a function to dampen water hammer and check valve slam, in which the water piping system prevents a check valve from suddenly closing due to the pressure of water discharged from the pressure tank at a sudden stoppage of a pump, thereby alleviating a shock wave attributed to check valve slam and thus dampening water hammer attributed to the shock wave.

**Technical Solution**

In order to accomplish the object of the invention, according to one aspect, there is provided a water piping system including: a pump; a check valve provided at a discharge side of the pump; a main pipeline that conveys pipeline water pumped by the pump; and a pressure tank that is connected to the main pipeline for the purpose of preventing water hammer, wherein a pressure tank connection pipe that connects the pressure tank to the main pipeline is connected to a portion of the main pipeline at a downstream side from the check valve, an end portion of the pressure tank connection pipe extends up to an inside portion of the main pipeline so as to be disposed inside the main pipeline, and an opening of the end portion of the pressure tank connection pipe faces in a direction of a primary flow of the pipeline water.

The end portion of the pressure tank connection pipe that is disposed in the main pipeline may be bent such that an opening of the end portion of the pressure tank connection pipes faces in the direction of the primary flow of the pipeline water.

The end portion of the pressure tank connection pipe that is disposed in the main pipeline may obliquely extend such that an opening of the end portion of the pressure tank connection pipe faces in the direction of the primary flow of the pipeline water.

The main pipeline may be equipped with a Venturi tube at a rear side of the end portion of the pressure tank connection pipe.

According to another aspect, there is provided a water piping system having a water hammer dampening function, including: a plurality of pumps connected in parallel with each other; a plurality of check valves provided at discharge sides of the respective pumps; a header that is connected to rear ends of the check valves and collects pipeline water pumped by the pumps; a main pipeline that is connected to the header and conveys the pipeline water; and a pressure tank that is installed to prevent water hammer, wherein the header and the main pipeline are connected to each other via a joint pipe, a pressure tank connection pipe connected to the pressure tank is connected to the joint pipe, an end portion of the pressure tank connection pipe extends up to an inside portion of the joint pipe such that the end portion is disposed in the joint pipe, and an opening of the end portion of the pressure tank connection pipe faces in a direction of a primary flow of the pipeline water.

The end portion of the pressure tank connection pipe disposed in the joint pipe may be bent or may obliquely extend such that an opening of the end portion of the pressure tank connection pipe faces in the direction of the primary flow of the pipeline water. The joint pipe may be equipped with a Venturi tube at a rear side of the end portion of the pressure tank connection pipe.

According to a further aspect, there is provided a water piping system having a water hammer dampening function, including: a pump; a check valve provided at a discharge side of the pump; a header that is connected to a rear side of the check valve and collects pipeline water pumped by the pump; a main pipeline that is connected to the header and conveys the pipeline water; and a pressure tank that is installed to prevent water hammer, wherein a pressure tank connection pipe connected to the pressure tank is connected to the header, an end portion of the pressure tank connection pipe extends up to an inside portion of the header such that the end portion is disposed in the header, and an opening of the end portion of the pressure tank connection pipe faces in a direction of a primary flow of the pipeline water.

The end portion of the pressure tank connection pipe that is disposed in the joint pipe may be bent or may obliquely extend such that an opening of the end portion of the pressure tank connection pipe faces in the direction of the primary flow of the pipeline water. The pressure tank connection pipe may be connected to an end of the header and the end portion of the pressure tank connection pipe that is disposed in the header may be arranged to be in parallel with the header such that the opening of the end portion of the pressure tank connection portion faces in the direction of the primary flow of the pipeline water. Further, the header may be equipped with a Venturi tube at a rear side of the end portion of the pressure tank connection pipe.

**Advantageous Effects**

According to the present invention, since the opening of the end of the pressure tank connection pipe faces in the direction of the primary flow of pipeline water, it is possible to deter the backflow of the pipeline water due to the ejector effect and to reduce pressure of the pipeline water applied to the check valve, which enables a complete closure of the check valve, thereby alleviating a shock wave attributed to check valve slam and dampening water hammer attributed to the check valve slam.

**Description of Drawings**

FIG. 1 is a diagram schematically illustrating a conventional water piping system;
FIG. 2 is a diagram illustrating a water piping system according to a first embodiment of the present invention;
FIG. 3 is a diagram illustrating a water piping system according to a second embodiment of the present invention;
FIG. 4 is a diagram illustrating a water piping system according to a third embodiment of the present invention;
FIG. 5 is a diagram illustrating a water piping system according to a fourth embodiment of the present invention;
FIG. 6 is a diagram illustrating a water piping system according to a fifth embodiment of the present invention;
FIG. 7 is a diagram illustrating a water piping system in which a control disc is added to a pressure tank connection pipe, according to a preferred embodiment of the present invention; and
FIGS. 8 is a diagram illustrating various examples of installation of the control disk.

<Description of the Reference>

| | |
|---|---|
| 2: pump | 4: check valve |
| 4a: disk | P: main pipeline |
| 5: pressure tank | 50: pressure tank connector |
| VT: Venturi tube | H: header |
| J: joint pipe | |

**Mode for Invention**

Hereinafter, water piping systems and pressure tank connectors therefore, according to preferred embodiments of the present invention, will be described below. Any water piping system according to the present invention is equipped with a function to dampen water hammer by using an ejector effect.

When water flows to a main pipeline P from a pressure tank 5 that is installed to dampen water hammer at a sudden stoppage of a pump 2, the water introduced into the main pipeline P applies pressure to a check valve 4, which results in a sudden closure of a disk 4a of the check valve 4. This generates a shock wave, which causes water hammer. In order to prevent this event, the present invention suggests a new structure of a pressure tank connection pipe 50 that connects the main pipeline P to the pressure tank 4 using an ejector effect.

An ejector is a kind of jet pump that ejects water, vapor, or air at high speed through a nozzle to change the direction of surrounding fluid. It is generally used in a condenser or water lifting machinery that lifts or pumps out rain water or muddy water. It is also used to discharge vapor or water or to condense vapor (refer to Environmental Engineering Glossary in Naver Encyclopedia of Knowledge)

The function and structure of an ejector is applied to the structure of the tank connection pipe 50 according to the present invention. That is, the water piping system includes the pump 2, the check valve 4 installed on the main pipeline P connected to the discharge side of the pump 2, the main pipeline P that conveys pipeline water pumped by the pump 2, and the pressure tank 5 that is connected to the main pipeline P to prevent water hammer. In the water piping system, the pressure tank connection pipe 50 that connects the pressure tank 5 and the main pipeline P to each other is connected to the main pipeline P at the downstream side from the check valve 4, an end of the pressure tank connection pipe 50 extends up to an inside portion of the main pipeline P such that at least an end portion of the pressure tank connection pipe 50 is disposed in the main pipeline P, and an opening at the end of the pressure tank connection pipe 50 is arranged to face a primary flow of pipeline water in the main pipeline P.

Specifically, FIG. 2 illustrates a water piping system according to a first embodiment of the present invention. As illustrated in FIG. 2, the pressure tank 5 is connected to the main pipeline P via the pressure tank connection pipe 50. It is specifically connected to a portion of the min pipeline P that is disposed at the downstream side from the check valve 4. The pressure tank connection pipe 50 extends up to an inside portion of the main pipeline P such that an end portion of the pressure tank connection pipe 50 is disposed in the main pipeline P, and the end portion of the pressure tank connection pipe 50 disposed in the main pipeline P is bent in the shape of elbow so that an opening at the end of the pressure tank connection pipe 50 is in the direction of the primary flow of pipeline water in the main pipeline P.

According to this structure, when a cavity develops in the main pipeline P at the downstream side from the check valve 4 at a sudden stoppage of the pump 2, water is introduced into the main pipeline P from the pressure tank 5 due to a sudden pressure down-surge in the main pipeline P. The water discharged from the pressure tank 5 has a high pressure when it is discharged through the pressure tank connection pipe 50. At this point, since the end portion of the pressure tank connection pipe 50 is bent toward the primary flow of the pipeline water, the water discharged from the pressure tank 5 flows at high pressure in the opposite side of the check valve 4. When a backflow occurs, the backflow of pipeline water is pushed by the water that is discharged from the pressure tank so that the backflow of pipeline is forced to flow in the direction of the original primary flow of pipeline water. This is called the ejector effect. Because of the ejector effect, the direction of the pipeline water is changed so that the pipeline water flows forward and the backflow of the pipeline water is deterred. For this reason, a pressure of water at the downstream side from the check valve 4 is relatively lower than that in other positions. That is, the pressure against the disk 4a of the check valve 4 is low, the check valve 4 does not suddenly close but closes relatively slowly in comparison with cases where a conventional pressure tank connection pipe is used. This prevents check valve slam and dampens water hammer.

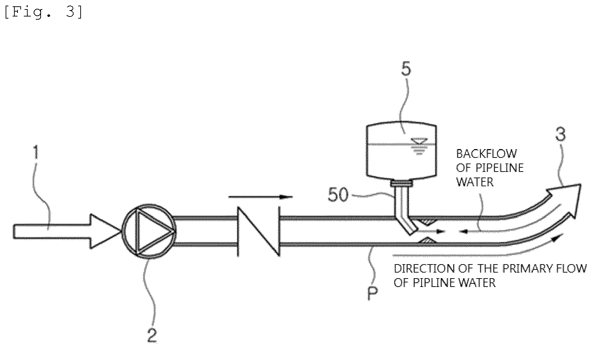

According to a second embodiment illustrated in FIG. 3, an end portion of the pressure tank connection pipe 50 that is disposed in the main pipeline is not bent but extends straight. The pressure tank connection pipe 50 according to the second embodiment extends up to an inside portion of the main pipeline P as in the first embodiment. However, the end portion disposed in the main pipeline P obliquely extends with respect to the primary flow of the pipeline water. Therefore, the second embodiment has the same effect as the first embodiment. That is, the structure of the pressure tank connection pipe 50 is not particularly limited as long as the end portion of the pressure tank connection pipe 50 extends up to an inside portion of the main pipeline P and the opening at the end portion of the pressure tank connection pipe 50 is arranged to face in the direction of the primary flow of the pipeline water.

As illustrated in FIGS. 2 and 3, the main pipeline P preferably has a constricted section (or Venturi tube, VT) at a rear side of the end of the pressure tank connection pipe 50. The Venturi tube is a tube that varies in its cross section area such that the cross section area decreases up to a midway position and then increases in the remaining part. When fluid passes through the most constricted section of the Venturi tube, the velocity of fluid increases due to the reduced cross section area according to Bernoulli's equation, and the pressure of fluid drops. Due to the reduced pressure, an effect that draws the fluid in the rear portion of the Venturi tube VT occurs. When the fluid reaches a rear portion of the Venturi tube, the fluid pressure rises because the increased cross section area. For this reason, the fluid flows at high pressure in the rear portion of the Venturi tube.

That is, the main pipeline P is equipped with the Venturi tube VT at a rear side of the end of the pressure tank connection pipe 50 to use the Venturi effect. For this reason, pipeline water gains velocity and surrounding water is drawn when the pipeline water passes through the Venturi tube VT. After the pipeline water passes through the Venturi tube, the pipeline water gains pressure as it passes an increased cross section area. As a result, the pipeline water with an increased pressure flows forward, thereby deterring the backflow of the pipeline water and maximizing a valve slam prevention effect.

The Venturi tube VT may be integrated with the inside wall of the main pipeline P. Alternatively, the Venturi tube is prepared as a separated member such as a Venturi diffuser and is connected to the main pipeline P.

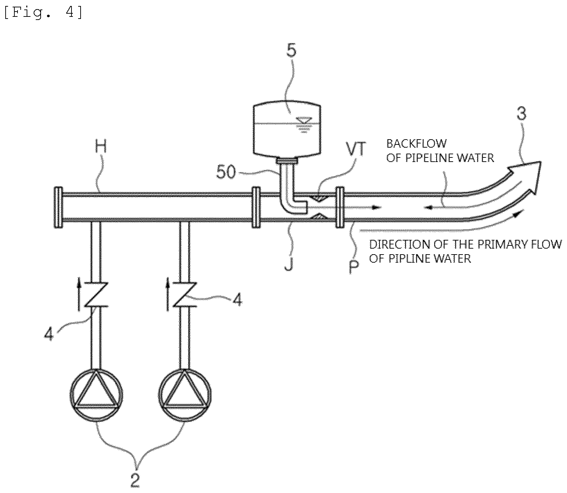

The water piping system described above has one pump 2 and one check valve 4. However, a typical water piping system includes a plurality of pumps 2 and a plurality of check valves 4. Therefore, as illustrated in FIG. 4, a water piping system may, according to a third embodiment, include a plurality of pumps 2, a plurality of check valves 4, and a header H. The header H is connected to a main pipeline P to collect water pumped by the pumps 2 connected in parallel with each other and to collectively convey the collected water to the main pipeline P.

As illustrated in FIG. 4, the water piping system according to the third embodiment includes: the plurality of pumps 2 connected in parallel with each other; the plurality of check valves 4, each being provided to a discharge sides of the pump 2; the header H that is connected to downstream sides from the check valves 4 and collectively conveys pipeline water pumped by the pumps 2 to the main pipeline P; the main pipeline P that is connected to the header H and conveys the pipeline water; and a pressure tank 5 for preventing water hammer. The header H and the main pipeline P are connected via a joint pipe J. The joint pipe J is connected to a pressure tank connection pipe 50 connected to the pressure tank 5. An end portion of the pressure tank connection pipe 50 extends up to an inside portion of the joint pipe J such that the end portion of the pressure tank connection pipe 50 is disposed in the joint pipe J. That is, an opening at the end portion of the pressure tank connection pipe 50 is arranged to face in the direction of a primary flow of pipeline water.

According to the third embodiment, when a plurality of combinations of the pump 2 and the check valve 4 is connected in parallel with each other, a pressure tank connector is provided between the header H and the main pipeline P for connection to the pressure tank 5. The pressure tank connector includes the pressure tank connection pipe 50 and the joint pipe J. The joint pipe J is provided with flanges at respective ends thereof to be connected to the header H and the main pipeline P. Alternatively, the joint pipe J is not provided with flanges. In this case, the joint pipe J is connected to the header H and the main pipeline P through welding or other connection methods. The pressure tank connection pipe 50 is connected to a portion of the circumferential outer surface of the joint pipe P. The end portion of the pressure tank connection pipe 50 extends up to an inside portion of the joint pipe J as in the first and second embodiments. The end portion of the pressure tank connection pipe 50 disposed in the joint pipe J is bent in the shape of elbow or obliquely extends. In either case, the opening at the end of the pressure tank connection pipe 50 faces in the direction of the primary flow of pipeline water. Preferably, the joint pipe J connected to a rear end of the pressure tank connection pipe 50 is equipped with a Venturi Tube VT.

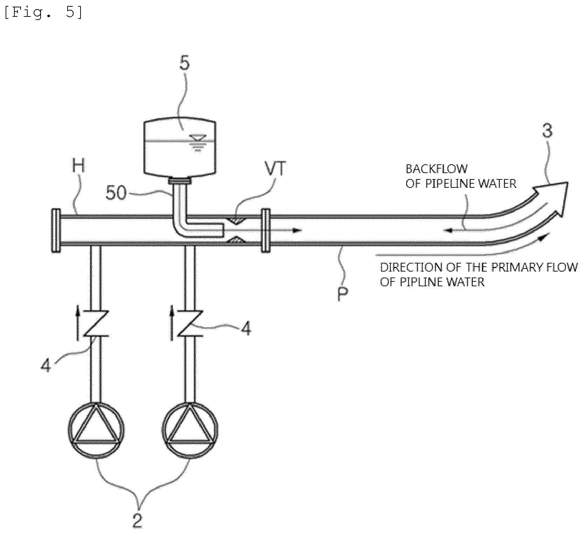

FIG. 5 illustrates a water piping system according to a fourth embodiment of the present invention. In the water piping system according to the fourth embodiment, combinations of a plurality of pumps 2 and a plurality of check valves 4 are connected in parallel with each other, and a pressure tank 5 is connected to a header without using a joint pipe J.

That is, the water piping system according to the fourth embodiment includes the pumps 2 connected in parallel with each other, the check valves 4 installed at discharge sides of the respective pumps 2, the header H connected to rear sides of the check valves 4 to collect pipeline water pumped by the pumps 2, a main pipeline P connected to the header H to convey pipeline water, and the pressure tank 5 for preventing water hammer. A pressure tank connection pipe 50 that connects the pressure tank 50 to the main pipeline P is connected to the header H. The pressure tank connection pipe 50 extends up to an inside portion of the header H so that an end portion of the pressure tank connection pipe 50 is disposed in the header H. The opening of the end portion of the pressure tank connection pipe 50 faces in the direction of the primary flow of pipeline water. As in the first to third embodiments, the end portion of the pressure tank connection pipe 50 that is disposed in the header H may be bent in the shape of elbow or may obliquely extend. Further, a portion of the header H at a downstream side from the end of the pressure tank connection pipe 50 may be equipped with a Venturi Tube VT.

As illustrated in FIG. 5, when the header H is connected to a plurality of pumps, the end of the pressure tank connection pipe 50 is arranged at the right side of the pump in the drawing, i.e., at the rearmost side of the pump.

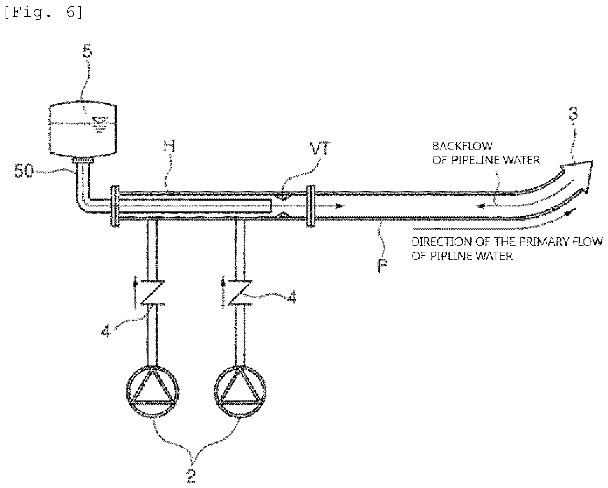

FIG. 6 illustrates a water piping system according to a fifth embodiment of the present invention. As in the fourth embodiment, the water piping system according to the fifth embodiment has a structure in which a plurality of pumps 2 and a plurality of check valves 4 are connected to a header H and a main pipeline without using a joint pipe J, and a pressure tank 5 is connected to the header H. However, the fifth embodiment is different from the third and fourth embodiments in that a pressure tank connection pipe 50 is connected to an end of the header H rather than the circumferential outer surface of the header H, and an end portion of the pressure tank connection pipe 50 that is disposed in the header H extends in parallel with the header H (i.e. in parallel with the direction of the primary flow of pipeline water). A Venturi tube VT may be provided in the header H, specifically at a position behind the end of the pressure tank connection pipe 50.

When the opening of the end of the pressure tank connection pipe 50 faces in the direction of the primary flow of pipeline water as described above, the backflow of pipeline water is deterred due to the ejector effect and the pressure of pipeline water that is applied to the check valve 4 is reduced. Therefore, the check valve 4 can be completely closed, which alleviates a shock wave attributed to check valve slam and dampens water hammer attributed to the check valve slam. The inventor built a pilot water piping system according to a preferred embodiment of the invention and confirmed that the pilot water piping system dampens water hammer by about 20% in comparison with a conventional water piping system that employs a pressure tank connection pipe that does not extend up to an inside portion of a main pipeline and does not extend in the direction of the primary flow of pipeline water.

The pressure tank normally stores water therein and discharges the water to the main pipeline P when the pump 2 suddenly stops and when a negative pressure occurs in the main pipeline P to eliminate the negative pressure. When pipeline water flows backward due to the stoppage of the pump 2, the backflow of pipeline water is introduced into the pressure tank 5 to absorb the pressure of pipeline water, thereby dampening water hammer. Inflow and outflow of water to and from the pressure tank 5 are repeated until a water hammer event completely ends.

In order to prevent water hammer using the pressure tank 5, the pressure tank 5 has to maintain a high operation pressure. However, if frictional resistance is increased when pipeline water is introduced into the pressure tank, the operation pressure of the pressure tank 5 can be reduced. To this end, conventionally, a side pipe connected to the pressure tank and the main pipeline at respective ends thereof is installed to be in parallel with the pressure tank connection pipe 50 and a check valve is installed on the pressure tank connection pipe 50. This structure eliminates the negative pressure when pipeline water flows from the pressure tank 5 to the main pipeline P and causes pipeline water to flow through the side pipe having high frictional pressure when pipeline water flows from the main pipeline P to the pressure tank 5. However, this structure requires using an additional valve and an additional pipe, which makes the pipeline structure complex and increases fabrication cost.

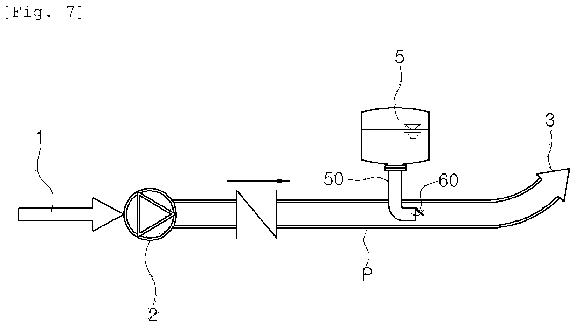

In order to solve this problem, according to a preferred embodiment of the present invention, as illustrated in FIG. 7, it is desirable that an end of a pressure tank connection pipe 50 is provided with a control disk 60. The control disk 60 reduces a cross section area of a pipeline through which pipeline water flows back into a pressure tank 5 when water hammer or backflow of pipeline water occurs, thereby increasing the velocity of pipeline water, which increases frictional resistance and lowers the operation pressure of the pressure tank.

Preferably, the control disk 60 is coupled to the end of the pressure tank connection pipe 50 via a hinge. The control disk 60 rotates forward to open when water flows from the pressure tank 5 to the main pipeline P (water flows in the direction of the primary flow of pipeline water), and closes when pipeline water flows backward. Preferably, the disk 60 partially covers the opening of the end of the pressure tank connection pipe. In this case, an area of the opening of the pressure tank connection pipe 50 covered by the control disk 60 varies depending on the environment of the water piping system. The area is determined not to cause cavitation attributed to an excessively high velocity of water.

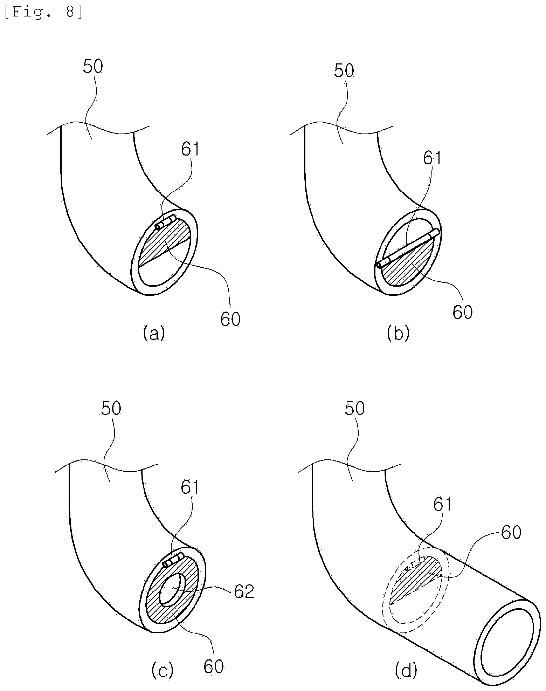

More specifically, as illustrated in FIG. 8(a), a control disk 60 according to a preferred embodiment of the present invention covers only an upper portion of the opening of the pressure tank connection pipe 50 and is rotatably coupled to the end of the pressure tank connection pipe 50 via a hinge that is attached to an upper side edge of the end of the pressure tank connection pipe 50. Alternatively, as illustrated in FIG. 8(b), a control disk 60 may have a semicircular shape to cover only a lower half of the opening of the pressure tank connection pipe 50 and may be coupled to the end of the pressure tank connection pipe 50 via a hinge that is attached to a middle portion of the opening of the end of the pressure tank connection pipe 50. Alternatively, as illustrated in FIG. 8(c), a control disk 60 may have a disk shape with a central orifice 62 and may be coupled to the end of the pressure tank connection pipe 50 via a hinge attached to an upper side edge of the opening of the pressure tank connection pipe 50 so that pipeline water flows through the central orifice 62.

Since the water piping system according to the present invention has the structure described above, when water is discharged from the pressure tank 5 to the main pipeline P, the control disk 60 is completely opened so that water can be smoothly discharged. On the other hand, at the time of the backflow, the control disk 60 is closed so that water can flow through only a partially opened portion of the opening of the pressure tank connection pipe 50. Therefore, frictional resistance is increased due to the reduced flow path, which reduces the pressure of water that flows back to the pressure tank 5. That is, the operation pressure of the pressure tank 50 is reduced, and thus design pressure can be lowered. Therefore, it is not necessary to use an additional check valve and structure, which simplifies the water piping system.

The control disk 60 may be installed at the end of the pressure tank connection pipe 50 as in the examples of FIGS. 8(a) to 8(c), but it may be installed in the middle of the pressure tank connection pipe 50 as illustrated in FIG. 8(d). This structure may be formed in a way that the disk 60 is installed at an end of the pressure tank connection pipe 50 and an additional pipe is added to the pressure tank connection pipe 50 through welding. Alternatively, a hinge 61 is installed on the inside wall in the middle of the pressure tank connection pipe 5 and the control disk is coupled via the hinge.

Although preferred embodiments of the present invention have been described for illustrative purposes, those skilled in the art will appreciate that the scope of the invention is not limited the embodiments but rather include equivalents to those embodiments.

**Claims**

1. A water piping system having a water hammer dampening function, comprising:

   a pump;
   a check valve provided at a discharge side of the pump;
   a main pipeline that conveys pipeline water pumped by the pump; and
   a pressure tank that is connected to the main pipeline for the purpose of preventing water hammer,
   wherein a pressure tank connection pipe that connects the pressure tank to the main pipeline is connected to a portion of the main pipeline at a downstream side from the check valve, an end portion of the pressure tank connection pipe extends up to an inside portion of the main pipeline such that the end portion is disposed inside the main pipeline, and an opening of the end portion of the pressure tank connection pipe faces in a direction of a primary flow of the pipeline water.

2. The water piping system of claim 1, wherein the end portion of the pressure tank connection pipe that is disposed in the main pipeline is bent such that the opening of the end portion faces in the direction of the primary flow of the pipeline water.

3. The water piping system of claim 1, wherein the pressure tank connection pipe is arranged such that the end portion thereof disposed in the main pipeline obliquely extends such that the opening of the end portion faces in the direction of the primary flow of the pipeline water.

4. The water piping system of any one of claims 1 to 3, wherein the main pipeline is equipped with a Venturi tube at a rear side of the end portion of the pressure tank connection pipe 50.

5. A water piping system having a water hammer dampening function, comprising:

a plurality of pumps connected in parallel with each other;
a plurality of check valves provided at discharge sides of the respective pumps;
a header that is connected to rear ends of the check valves and collects pipeline water pumped by the pumps;
a main pipeline that is connected to the header and conveys the pipeline water; and
a pressure tank that is installed to prevent water hammer,
wherein the header and the main pipeline are connected to each other via a joint pipe, a pressure tank connection pipe connected to the pressure tank is connected to the joint pipe, an end portion of the pressure tank connection pipe extends up to an inside portion of the joint pipe such that the end portion is disposed in the joint pipe, and an opening of the end portion of the pressure tank connection pipe faces in a direction of a primary flow of the pipeline water.

6. The water piping system of claim 5, wherein the end portion of the pressure tank connection pipe that is disposed in the joint pipe is bent such that the opening of the end portion of the pressure tank connection pipe faces in the direction of the primary flow of the pipeline water.

7. The water piping system of claim 5, wherein the end portion of the pressure tank connection pipe that is disposed in the joint pipe obliquely extends such that the opening of the end portion faces in the direction of the primary flow of the pipeline water.

8. The water piping system of any one of claims 5 to 7, wherein the joint pipe is equipped with a Venturi tube at a rear side of the end portion of the pressure tank connection pipe.

9. A water piping system having a water hammer dampening function, comprising:

a pump;
a check valve provided at a discharge side of the pump;
a header that is connected to a rear side of the check valve and collects pipeline water pumped by the pump;
a main pipeline that is connected to the header and conveys the pipeline water; and
a pressure tank that is installed to prevent water hammer,
wherein a pressure tank connection pipe connected to the pressure tank is connected to the header, an end portion of the pressure tank connection pipe extends up to an inside portion of the header such that the end portion is disposed in the header, and an opening of the end portion of the pressure tank connection pipe faces in a direction of a primary flow of the pipeline water.

10. The water piping system of claim 9, wherein the end portion of the pressure tank connection pipe that is disposed in the header is bent such that the opening of the end portion faces in the direction of the primary flow of the pipeline water.

11. The water piping system of claim 9, wherein the end portion of the pressure tank connection pipe that is disposed in the header obliquely extends such that the opening of the end portion faces in the direction of the primary flow of the pipeline water.

12. The water piping system of claim 9, wherein the pressure tank connection pipe is connected to an end of the header and the end portion of the pressure tank connection pipe that is disposed in the header is arranged in parallel with the header such that the opening of the end portion of the pressure tank connection pipe faces in the direction of the primary flow of the pipeline water.

13. The water piping system of any one of claims 9 to 12, wherein the header is equipped with a Venturi tube at a rear side of the end portion of the pressure tank connection pipe.

14. The water piping system of any one of claims 1, 5, and 9, wherein a control disk is provided to the opening of the pressure tank connection pipe to increase frictional resistance of pipeline water introduced into the pressure tank when a backflow event occurs, thereby reducing an operation pressure of the pressure tank.

15. The water piping system of claim 14, wherein the control disk is rotatably coupled to the opening of the end portion of the pressure tank connection pipe via a hinge, the control disk rotates forward to open when water is discharged to the main pipeline from the pressure tank, the control disk closes when the pipeline water flows backward, and the control disk is structured to partially cover the opening of the pressure tank connection pipe.

16. The water piping system of claim 15, wherein the control disk covers only an upper portion of the opening of the pressure tank connection pipe and is rotatably coupled to an upper side edge of the opening of the end portion of the pressure tank connection pipe via a hinge.

17. The water piping system of claim 15, wherein the control disk covers only a lower portion of the opening of the pressure tank connection pipe and is rotatably coupled to the end portion of the pressure tank connection pipe via a hinge which crosses a middle portion of the opening.

18. The water piping system of claim 15, wherein the control disk is rotatably coupled to an upper side edge of the opening of the end portion of the pressure tank connection pipe via a hinge and has a circular shape with a central orifice through which the pipeline water can flow.

19. A pressure tank connector comprising:

a joint pipe with respective ends to which different pipes are connected; and
a pressure tank connection pipe that connects a pressure tank to the joint pipe,
wherein an end portion of the pressure tank connection pipe extends up to an inside portion of the joint pipe so that the end portion is disposed in the joint pipe and an opening of the end portion of the pressure tank connection pipe faces in a direction of a primary flow of pipeline water.

20. The pressure tank connector of claim 19, wherein the end portion of the pressure tank connection pipe that is disposed in the joint pipe is bent such that the opening of the pressure tank connection pipe faces in the direction of the primary flow of the pipeline water.

21. The pressure tank connector of claim 19, wherein the end portion of the pressure tank connection pipe that is disposed in the joint pipe obliquely extends such that the opening of the pressure tank connection pipe faces in the direction of the primary flow of the pipeline water.

22. The pressure tank connector of any one of claims 19 to 21, wherein the joint pipe is equipped with a Venturi tube at a rear side of the end portion of the pressure tank connection pipe.

23. The pressure tank connector of claim 19, wherein a control disk is provided to the opening of the pressure tank connection pipe to increase frictional resistance of pipeline water introduced into the pressure tank when a backflow event occurs, thereby reducing an operation pressure of the pressure tank.

24. The pressure tank connector of claim 23, wherein the control disk is rotatably coupled to the opening of the end portion of the pressure tank connection pipe via a hinge, the control disk rotates forward to open when water is discharged to the main pipeline from the pressure tank, the control disk closes when the pipeline water flows backward, and the control disk is structured to partially cover the opening of the pressure tank connection pipe.

25. The pressure tank connector of claim 24, wherein the control disk covers only an upper portion of the opening of the pressure tank connection pipe and is rotatably coupled to an upper side edge of the opening of the end portion of the pressure tank connection pipe via a hinge.

26. The pressure tank connector of claim 24, wherein the control disk covers only a lower portion of the opening of the pressure tank connection pipe and is rotatably coupled to the end portion of the pressure tank connection pipe via a hinge which crosses a middle portion of the opening.

27. The pressure tank connector of claim 24, wherein the control disk is rotatably coupled to an upper side edge of the opening of the end portion of the pressure tank connection pipe via a hinge and has a circular shape with a central orifice through which the pipeline water can flow.

**Amended claims under Art. 19.1 PCT**

1.  A water piping system having a water hammer dampening function, comprising:

    a pump;
    a check valve provided at a discharge side of the pump;
    a main pipeline that conveys pipeline water pumped by the pump; and
    a pressure tank that is connected to the main pipeline for the purpose of preventing water hammer,
    wherein a pressure tank connection pipe that connects the pressure tank to the main pipeline is connected to a portion of the main pipeline at a downstream side from the check valve, an end portion of the pressure tank connection pipe extends up to an inside portion of the main pipeline such that the end portion is disposed inside the main pipeline, and an opening of the pressure tank connection pipe faces in a direction of a primary flow of the pipeline water.

2.  The water piping system of claim 1, wherein the end portion of the pressure tank connection pipe that is disposed in the main pipeline is bent such that the opening of the end portion faces in the direction of the primary flow of the pipeline water.

3.  The water piping system of claim 1, wherein the pressure tank connection pipe is arranged such that the end portion thereof disposed in the main pipeline obliquely extends such that the opening of the end portion faces in the direction of the primary flow of the pipeline water.

4.  The water piping system of any one of claims 1 to 3, wherein the main pipeline is equipped with a Venturi tube at a rear side of the end portion of the pressure tank connection pipe 50.

5.  A water piping system having a water hammer dampening function, comprising:

    a plurality of pumps connected in parallel with each other;
    a plurality of check valves provided at discharge sides of the respective pumps;
    a header that is connected to rear ends of the check valves and collects pipeline water pumped by the pumps;
    a main pipeline that is connected to the header and conveys the pipeline water; and
    a pressure tank that is installed to prevent water hammer,
    wherein the header and the main pipeline are connected to each other via a joint pipe, a pressure tank connection pipe connected to the pressure tank is connected to the joint pipe, an end portion of the pressure tank connection pipe extends up to an inside portion of the joint pipe such that the end portion is disposed in the joint pipe, and an opening of the pressure tank connection pipe faces in a direction of a primary flow of the pipeline water.

6.  The water piping system of claim 5, wherein the end portion of the pressure tank connection pipe that is disposed in the joint pipe is bent such that the opening of the end portion of the pressure tank connection pipe faces in the direction of the primary flow of the pipeline water.

7.  The water piping system of claim 5, wherein the end portion of the pressure tank connection pipe that is disposed in the joint pipe obliquely extends such that the opening of the end portion faces in the direction of the primary flow of the pipeline water.

8.  The water piping system of any one of claims 5 to 7, wherein the joint pipe is equipped with a Venturi tube at a rear side of the end portion of the pressure tank connection pipe.

9.  A water piping system having a water hammer dampening function, comprising:

    a pump;
    a check valve provided at a discharge side of the pump;
    a header that is connected to a rear side of the check valve and collects pipeline water pumped by the pump;
    a main pipeline that is connected to the header and conveys the pipeline water; and
    a pressure tank that is installed to prevent water hammer,

wherein a pressure tank connection pipe connected to the pressure tank is connected to the header, an end portion of the pressure tank connection pipe extends up to an inside portion of the header such that the end portion is disposed in the header, and an opening of the pressure tank connection pipe faces in a direction of a primary flow of the pipeline water.

10. The water piping system of claim 9, wherein the end portion of the pressure tank connection pipe that is disposed in the header is bent such that the opening of the end portion faces in the direction of the primary flow of the pipeline water.

11. The water piping system of claim 9, wherein the end portion of the pressure tank connection pipe that is disposed in the header obliquely extends such that the opening of the end portion faces in the direction of the primary flow of the pipeline water.

12. The water piping system of claim 9, wherein the pressure tank connection pipe is connected to an end of the header and the end portion of the pressure tank connection pipe that is disposed in the header is arranged in parallel with the header such that the opening of the end portion of the pressure tank connection pipe faces in the direction of the primary flow of the pipeline water.

13. The water piping system of any one of claims 9 to 12, wherein the header is equipped with a Venturi tube at a rear side of the end portion of the pressure tank connection pipe.

14. The water piping system of any one of claims 1, 5, and 9, wherein a control disk is provided to the opening of the pressure tank connection pipe to increase frictional resistance of pipeline water introduced into the pressure tank when a backflow event occurs, thereby reducing an operation pressure of the pressure tank.

15. The water piping system of claim 14, wherein the control disk is rotatably coupled to the opening of the end portion of the pressure tank connection pipe via a hinge, the control disk rotates forward to open when water is discharged to the main pipeline from the pressure tank, the control disk closes when the pipeline water flows backward, and the control disk is structured to partially cover the opening of the pressure tank connection pipe.

16. The water piping system of claim 15, wherein the control disk covers only an upper portion of the opening of the pressure tank connection pipe and is rotatably coupled to an upper side edge of the opening of the end portion of the pressure tank connection pipe via a hinge.

17. The water piping system of claim 15, wherein the control disk covers only a lower portion of the opening of the pressure tank connection pipe and is rotatably coupled to the end portion of the pressure tank connection pipe via a hinge which crosses a middle portion of the opening.

18. The water piping system of claim 15, wherein the control disk is rotatably coupled to an upper side edge of the opening of the end portion of the pressure tank connection pipe via a hinge and has a circular shape with a central orifice through which the pipeline water can flow.

19. A pressure tank connector comprising:

a joint pipe with respective ends to which different pipes are connected; and
a pressure tank connection pipe that connects a pressure tank to the joint pipe,
wherein an end portion of the pressure tank connection pipe extends up to an inside portion of the joint pipe so that the end portion is disposed in the joint pipe and an opening of the pressure tank connection pipe faces in a direction of a primary flow of pipeline water.

20. The pressure tank connector of claim 19, wherein the end portion of the pressure tank connection pipe that is disposed in the joint pipe is bent such that the opening of the pressure tank connection pipe faces in the direction of the primary flow of the pipeline water.

21. The pressure tank connector of claim 19, wherein the end portion of the pressure tank connection pipe that is disposed in the joint pipe obliquely extends such that the opening of the pressure tank connection pipe faces in the direction of the primary flow of the pipeline water.

22. The pressure tank connector of any one of claims 19 to 21, wherein the joint pipe is equipped with a Venturi tube at a rear side of the end portion of the pressure tank connection pipe.

23. The pressure tank connector of claim 19, wherein a control disk is provided to the opening of the pressure tank connection pipe to increase frictional resistance of pipeline water introduced into the pressure tank when a backflow event occurs, thereby reducing an operation pressure of the pressure tank.

24. The pressure tank connector of claim 23, wherein the control disk is rotatably coupled to the opening of the end portion of the pressure tank connection pipe via a hinge, the control disk rotates forward to open when water is discharged to the main pipeline from the pressure tank, the control disk closes when the pipeline water flows backward, and the control disk is structured to partially cover the opening of the pressure tank connection pipe.

25. The pressure tank connector of claim 24, wherein the control disk covers only an upper portion of the opening of the pressure tank connection pipe and is rotatably coupled to an upper side edge of the opening of the end portion of the pressure tank connection pipe via a hinge.

26. The pressure tank connector of claim 24, wherein the control disk covers only a lower portion of the opening of the pressure tank connection pipe and is rotatably coupled to the end portion of the pressure tank connection pipe via a hinge which crosses a middle portion of the opening.

27. The pressure tank connector of claim 24, wherein the control disk is rotatably coupled to an upper side edge of the opening of the pressure tank connection pipe via a hinge and has a circular shape with a central orifice through which the pipeline water can flow.

[Fig. 1]

[Fig. 2]

[Fig. 3]

BACKFLOW
OF PIPELINE
WATER

DIRECTION OF THE PRIMARY FLOW
OF PIPELINE WATER

[Fig. 4]

[Fig. 5]

5

H

50

VT

BACKFLOW
OF PIPELINE WATER

3

DIRECTION OF THE PRIMARY FLOW
OF PIPELINE WATER

P

4

4

4

2

[Fig. 6]

BACKFLOW
OF PIPELINE WATER

DIRECTION OF THE PRIMARY FLOW
OF PIPLINE WATER

[Fig. 7]

[Fig. 8]

(a)

(b)

(c)

(d)

## INTERNATIONAL SEARCH REPORT

International application No.

**PCT/KR2016/001466**

| A. CLASSIFICATION OF SUBJECT MATTER |
|---|
| *F17D 5/00(2006.01)i, F17D 1/14(2006.01)i, F16L 55/045(2006.01)i, F04B 49/10(2006.01)i* |
| According to International Patent Classification (IPC) or to both national classification and IPC |

| B. FIELDS SEARCHED |
|---|
| Minimum documentation searched (classification system followed by classification symbols) |
| F17D 5/00; F16L 55/24; A23L 11/00; F16L 55/04; F16K 47/02; F16L 55/02; F24H 9/20; F24D 19/10; F17D 1/14; F16L 55/045; F04B 49/10 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: pressure, chamber, pipe, bending, bending, counterflow and shock |

| C. DOCUMENTS CONSIDERED TO BE RELEVANT | | |
|---|---|---|
| Category* | Citation of document, with indication, where appropriate, of the relevant passages | Relevant to claim No. |
| A | KR 10-2009-0054162 A (YANG, Cheol Soo) 29 May 2009<br>See paragraphs [0019]-[0024] and figure 1. | 1-27 |
| A | KR 20-0464107 Y1 (HWANG, Kwang Yeon) 11 December 2012<br>See paragraphs [0014]-[0027] and figures 1-4. | 1-27 |
| A | KR 10-2006-0020847 A (SAMSUNG ELECTRONICS CO., LTD.) 07 March 2006<br>See paragraphs [0024]-[0033] and figures 1-4. | 1-27 |
| A | KR 10-0868908 B1 (YANG, Jae Gu et al.) 14 November 2008<br>See paragraphs [0013]-[0036] and figures 1-4. | 1-27 |
| A | KR 10-2005-0070329 A (DOOSAN HEAVY INDUSTRIES & CONSTRUCTION CO., LTD.) 07 July 2005<br>See paragraphs [0024]-[0033] and figures 1-4. | 1-27 |

| ☐ Further documents are listed in the continuation of Box C. | ☒ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 23 APRIL 2016 (23.04.2016) | **29 APRIL 2016 (29.04.2016)** |

| Name and mailing address of the ISA/KR<br>Korean Intellectual Property Office<br>Government Complex-Daejeon, 189 Seonsa-ro, Daejeon 302-701, Republic of Korea<br>Facsimile No. 82-42-472-7140 | Authorized officer<br><br>Telephone No. |
|---|---|

Form PCT/ISA/210 (second sheet) (January 2015)

INTERNATIONAL SEARCH REPORT
Information on patent family members

International application No.

**PCT/KR2016/001466**

| Patent document cited in search report | Publication date | Patent family member | Publication date |
|---|---|---|---|
| KR 10-2009-0054162 A | 29/05/2009 | KR 10-0932689 B2 | 21/12/2009 |
| KR 20-0464107 Y1 | 11/12/2012 | NONE | |
| KR 10-2006-0020847 A | 07/03/2006 | NONE | |
| KR 10-0868908 B1 | 14/11/2008 | NONE | |
| KR 10-2005-0070329 A | 07/07/2005 | KR 10-0513381 B1 | 06/09/2005 |

Form PCT/ISA/210 (patent family annex) (January 2015)